# FASCICULE DE BREVET EUROPEEN

(11) **EP 4 406 705 B1**
(45) Date de publication et mention de la délivrance du brevet: **25.11.2026**
(21) Numéro de dépôt: 23315015.0
(22) Date de dépôt: 30.01.2023
(51) Int. Cl.: B25H 1/06, F16M 11/24, F16M 11/28, F16M 11/38

(54) **SERVANTE**
STÜTZVORRICHTUNG
WORK SUPPORT

(43) Date de publication de la demande: 31.07.2024
(73) Titulaire: MACC, 86104 Chatellerault Cedex (FR)
(72) Inventeur: Cupif, Bertrand, 86104 Chatellerault Cedex (FR); Souriau, Jérémy, 86104 Chatellerault Cedex (FR)

(56) Documents cités:
- US-A- 2 361 781
- US-A- 2 847 176
- US-A1- 2005 012 000
- US-B1- 6 173 929
- ANONYMOUS: "Servante multifonction | Triton Tools", 10 May 2016 (2016-05-10), pages 1 - 6, XP093062111, Retrieved from the Internet <URL:https%3A%2F%2Fweb.archive.org%2Fweb%2F20160510011438%2Fhttps%3A%2F%2Fwww.tritontools.com%2Ffr-FR%2FProduct%2F%C3%89tabli%2F%C3%89tablis%2FMSA200> [retrieved on 20230707]

## Description

L'invention concerne une servante à fonction de soutènement telle qu'une servante à rouleau et/ou à billes, destinée à soutenir notamment des pièces longues dépassant d'un plan de travail ou d'une machine.

Une servante du type à rouleau comporte un piètement, un mât télescopique et une tête comprenant dans un plan perpendiculaire à l'axe du mât, un support solidaire de l'extrémité du mât à l'opposé du piètement et un rouleau et/ou une rampe à billes monté(s) sur le support.

Dans la suite de la description, l'expression « servante du type à rouleau » s'entend par une servante comprenant soit un support à rouleau, soit un support doté d'une rampe à billes, ou encore un support portant à la fois un rouleau et une rampe à billes.

Une servante du type à rouleau est utilisée en atelier ou sur chantier et permet de soutenir des pièces qui s'étendent depuis une autre surface. Or, une servante du type à rouleau occupe de l'espace hors utilisation. Pour diminuer leur encombrement au sol et faciliter leur manipulation pour les transporter, certaines servantes présentent leur piètement sous la forme d'un trépied pliable et dépliable à la manière d'un trépied d'appareil photographique : en position d'utilisation, les pieds sont écartés et en position repliée, les pieds sont ramenés les uns contre les autres, dans le prolongement du mât et selon une direction opposée à la tête. Cependant, une telle servante du type à rouleau, même avec le trépied replié, n'est pas pratique à porter du fait de sa forme générale allongée et son support qui s'étend transversalement au corps longiligne du mât. L'utilisateur peut malencontreusement cogner la servante, en particulier le support à rouleau, contre des portes ou des meubles lorsqu'il la manipule pour la déplacer d'un endroit à un autre.

L'invention a donc pour but de proposer une servante à rouleau et/ou à billes qui soit bien moins encombrante que les servantes existantes, soit facile à transporter hors utilisation et soit aisée et rapide à installer et à ranger.

La servante multifonction de Triton Tools, XP093062111 divulgue les caractéristiques du préambule de la revendication 1.

La servante à fonction de soutènement de l'invention est conforme à la revendication 1.

En particulier, selon l'invention, la servante à fonction de soutènement comporte un piètement pliable, un mât télescopique qui comprend un corps tubulaire et un montant coulissant, un support portant au moins un élément de soutènement (support du type à rouleau), le support étant fixé en extrémité du montant coulissant et agencé dans un plan transversal au corps tubulaire en position d'utilisation de la servante, la servante étant caractérisée en ce que le support est apte à être agencé parallèlement au corps tubulaire dans une position hors utilisation de la servante.

Ainsi, en comprenant un piètement pliable et un support apte à être rangé hors utilisation dans une position parallèle au corps tubulaire (et non dans un plan transversal), la servante devient un dispositif compact. La servante est donc facilement manipulable et rangeable.

Dans la suite de la description, les termes « horizontal », « vertical », « supérieur », « inférieur », « haut », « bas », s'entendent en qualifiant des éléments de la servante de l'invention dans le cadre d'une installation normale de la servante, c'est-à-dire relatif à une notion verticale par rapport à un sol sur lequel repose de manière fixe la servante.

Selon une caractéristique le support est pliable, en particulier pliable en étant apte à être rabattu contre le corps tubulaire. L'aspect pliable du support à rouleau permet de passer facilement et rapidement d'une position d'utilisation à une position de rangement, ou vis-versa. En variante, le support pourrait être amovible et apte à être rangé contre le corps tubulaire du mât, la servante restant ainsi compacte hors utilisation.

Cette conception compacte de la servante la rend aisément transportable, en évitant en outre que l'utilisateur ne la cogne en cours de trajet. De plus, sa compacité la rend facilement rangeable.

Ledit au moins un élément de soutènement peut être un rouleau et/ou une rampe à billes.

Avantageusement, le support est fixé au montant coulissant, de préférence via une platine d'interface, grâce à des moyens de liaison et d'articulation, en particulier les moyens de liaison et d'articulation autorisant un mouvement de pivotement du support pour passer d'une position d'utilisation à une position rangée ou vis-versa. Notamment, les moyens de liaison et d'articulation comportent deux biellettes espacées et en regard qui sont, d'une part, reliées entre elles et fixées à un axe, de préférence l'axe étant solidaire de ladite platine d'interface, et d'autre part, à une des extrémités du support. Selon une caractéristique, le support est apte à pivoter de 270°.

Selon une autre caractéristique, le piètement comporte des pieds, de préférence comporte trois pieds formant un trépied en position déployée du piètement, les pieds étant pliables en étant aptes à être amenés parallèlement et contre le corps tubulaire en direction du support. En particulier les extrémités d'appui au sol des pieds sont alors amenées au niveau de l'extrémité du montant coulissant sans la dépasser. Cet agencement de pliage des pieds, non pas dans la continuité du corps tubulaire, mais en étant rabattus à hauteur et contre le corps tubulaire, rend la servante encore plus compacte. Avantageusement, les pieds du trépied sont espacés de sorte qu'en position pliée à la fois des pieds et du support, le support est rangé parallèlement et entre deux pieds repliés.

De préférence, la servante comporte un dispositif de blocage du piètement et du support dans leur position repliée, de préférence le dispositif de blocage procurant également une fonction d'aide au rangement du piètement et du support.

Selon un exemple de réalisation, le dispositif de blocage est fixé sur le corps tubulaire et comporte des logements d'accueil aptes à recevoir et retenir le piètement et l'élément de soutènement (tel que le rouleau) porté par support. En particulier, le dispositif de blocage comporte des logements d'accueil (de préférence quatre) répartis autour du corps tubulaire dont des logements d'accueil (de préférence trois) sont destinés à recevoir et bloquer des pieds repliés constitutif du piètement (de préférence un trépied) et un autre logement d'accueil destiné à recevoir et bloquer l'élément de soutènement (le rouleau) porté par le support. De préférence, les logements d'accueil présentent une ouverture d'accueil de section transversale en forme générale de lyre. Avantageusement, au moins la partie (le logement) du dispositif de blocage recevant l'élément de soutènement est en matière plastique pour éviter d'abîmer ledit élément de soutènement en position rangée. De préférence, l'ensemble du dispositif de blocage est en matière plastique.

De préférence, le dispositif de blocage est rendu solidaire de manière fixe du corps tubulaire tel que par rivetage. ; il est à fixation par clippage sur le corps tubulaire et les logements d'accueil sont à retenue par clippage du piètement et de l'élément de soutènement. Le dispositif de blocage permet en outre d'éviter la rotation du rouleau en tant qu'élément de soutènement dans sa position rangée.

Selon une autre caractéristique, la servante comporte un système de verrouillage du support en position d'utilisation de la servante, en particulier le système de verrouillage est une pièce mâle à rappel élastique (solidaire d'une platine d'interface fixée au montant coulissant et sur laquelle est monté le support à rouleau) apte à coopérer avec un trou agencé dans le support.

Selon encore une autre caractéristique, l'extrémité du corps tubulaire à l'opposé du montant coulissant présente une forme plate et peut comprendre une semelle de protection en matière plastique.

Selon encore une autre caractéristique, le mât télescopique est réglable et blocable en hauteur via un système comprenant une plaquette apte à s'arc-bouter et un ressort.

La présente invention est maintenant décrite à l'aide d'un exemple uniquement illustratif et nullement limitatif de la portée de l'invention, et à partir des illustrations jointes, dans lesquelles :
- [Fig. 1] représente une vue de face dans sa position d'utilisation d'une servante à rouleau selon l'invention et à hauteur maximale de déploiement du montant coulissant.
- [Fig. 2] correspond à la figure 1 à la hauteur minimale de la servante, le montant coulissant étant totalement rentré.
- [Fig. 3] illustre une vue de face de la servante de l'invention dans sa position rangée, c'est-à-dire totalement repliée, le piètement et le support à rouleau étant repliés.
- [Fig. 4] est une vue de côté de la figure 3.
- [Fig. 5] montre une vue en perspective de la servante au début de son rangement, en commençant par le pliage des pieds.
- [Fig. 6] illustre l'étape suivante de la figure 5 après repliage des pieds et en cours de pliage du support du rouleau.
- [Fig. 7] est la suite de la figure 6 du pliage du support du rouleau.
- [Fig. 8] correspond à la servante après repliage du support du rouleau, la servante étant rangée comme sur la figure 3.
- [Fig. 9] est une vue de détail lors de l'étape de début de déploiement du support de rouleau en vue de l'utilisation de la servante.
- [Fig. 10] correspond à une étape qui suit l'étape de la figure 9.

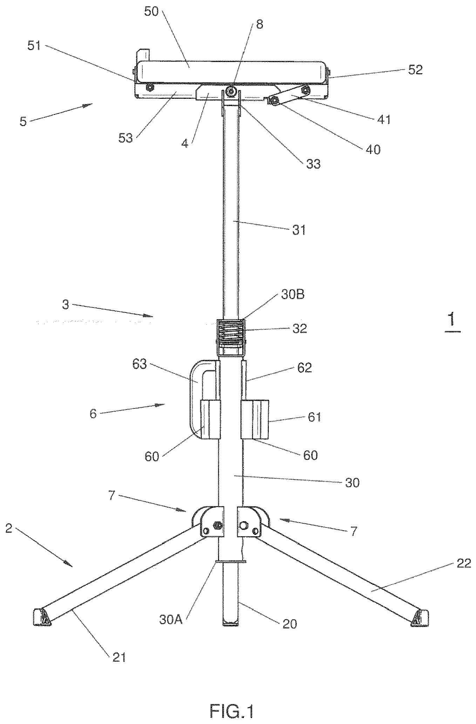

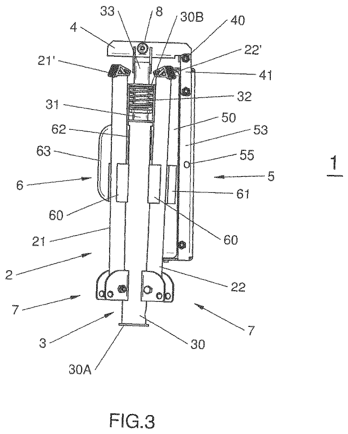

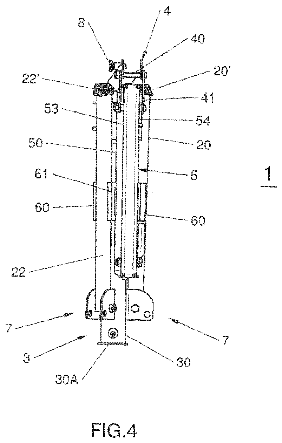

La servante du type à rouleau 1 de l'invention illustrée sur les figures 1 à 4 comporte un piètement 2 pliable, un mât 3 télescopique, une platine 4, un support 5 pliable doté d'au moins un élément de soutènement 50 tel qu'ici un rouleau, et de préférence un dispositif de blocage 6 apte à assurer le maintien du piètement 2 et du support 5 dans leur position repliée (figures 3 et 4), le dispositif de blocage 6 ayant également une fonction d'aide au rangement du piètement et du support et de préférence également une fonction de préhension de l'ensemble de la servante.

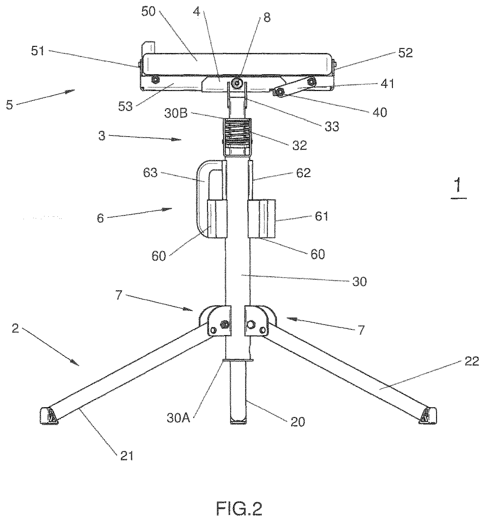

Le mât 3 est télescopique. Il comporte un corps tubulaire 30 et un montant coulissant 31. Le mât 3 télescopique est de préférence réglable et blocable en hauteur via un système 32 interne au corps tubulaire 30 et comprenant une plaquette apte à s'arc-bouter et un ressort. Le système 32 à arc-boutement et à ressort ne sera pas davantage décrit car connu en soi. Le corps tubulaire 30 présente une extrémité dite inférieure 30A et une extrémité dite supérieure 30B depuis laquelle peut s'étendre le montant coulissant 31. Le montant coulissant 31 présente une extrémité distale dite dépassante 33 qui fait saillie par rapport au corps tubulaire 30 en position totalement rangée (figure 2) dudit montant à l'intérieur dudit corps 30 et sur laquelle est fixé la platine 4.

Le piètement 2 comporte trois pieds 20, 21 et 22. Le piètement 2 est pliable, c'est-à-dire qu'il est apte à être déplié en position d'utilisation de la servante en adoptant (figures 1 et 2) un agencement déployé des trois pieds 20 à 22 pour former un trépied, et est apte à être plié en position dite rangée de la servante (hors utilisation de la servante) en adoptant (figures 3 et 4) un agencement replié des trois pieds, autour du corps tubulaire 30 du mât, parallèlement à celui-ci et en direction de l'extrémité supérieure 30B du corps tubulaire 30, en particulier vers l'extrémité dépassante 33 du mât. En position repliée des trois pieds 20 à 22, leur terminaison libre 20', 21' et 22' destinée à l'appui au sol du piètement 2 est en regard de l'extrémité dépassante 33 du mât. Ainsi, les pieds sont repliés vers l'extrémité supérieure 30B du corps 30 ou l'extrémité dépassante 33 du mât, au lieu de s'étendre longitudinalement au corps tubulaire, au-delà de l'extrémité inférieure 30A du corps. De cette façon, le piètement 2 couplé au corps tubulaire 30 forment un ensemble compact, de longueur correspondant sensiblement à la longueur du corps tubulaire 30. Les pieds 20 à 22 sont fixés et articulés à proximité de l'extrémité inférieure 30A, tel que par des chapes d'articulation 7 solidaires du corps tubulaire 30.

Le support 5 porte l'élément de soutènement 50 qui y est fixé par exemple par boulonnage ; ici le rouleau 50 est fixé par ses deux extrémités à deux flasques opposés 51 et 52 solidaires des deux extrémités distales du support 5 de forme longitudinale pour accueillir le rouleau.

Le support 5 est fixé au mât 3 grâce à la platine 4. La platine 4 est disposé dans un plan transversal au mât 3. La platine 4 est fixée à l'extrémité dépassante 33 du montant 31, par exemple par soudage.

Le support 5 (du rouleau) est pliable, c'est-à-dire qu'il est apte à adopter une position rangée en étant agencé parallèlement au corps tubulaire 30 (figures 3 et 4) et une position d'utilisation (figures 1 et 2) en étant disposé transversalement au corps tubulaire 30. Le support 5 est fixé et articulé sur la platine 4. Pour assurer un aspect compact de la servante en position pliée, la platine 4 présente des dimensions telles que sa largeur (figure 4) correspond à la largeur du support 5 et sa longueur (figure 3) qui est inférieure à la longueur du support 5, s'inscrit dans la section de la servante en position pliée de la servante. Selon une direction perpendiculaire au mât 3, la platine 4, en position pliée de la servante, ne dépasse donc pas des pieds repliés 20 à 22 et du support replié 5.

Le support 5 est articulé en pivotement par rapport à la platine 4. L'angle de pivotement est de 90° pour amener le support 5 d'une position d'utilisation à une position rangée et inversement, la position d'utilisation (horizontale) étant dans un plan perpendiculaire au mât 3 (figures 1 et 2) et la position rangée étant parallèle et en vis-à-vis du mât 3 (figures 3 et 4). Le support 5 est apte à pivoter autour d'un axe 40 qui est solidaire de la platine 4 dans un plan (horizontal) perpendiculaire au mât 3. Le support 5 est fixé à la platine 4 par des moyens de liaison et d'articulation 41 qui, d'une part, sont solidaires du support 5, en particulier de l'une des extrémités du support 5, et d'autre part, sont solidaires de l'axe 40. De préférence, les moyens de liaison et d'articulation 41 sont constitués de deux biellettes de liaison en regard qui coopèrent chacune en leur première extrémité avec les deux terminaisons respectives de l'axe 40, et en leur seconde extrémité avec deux côtés opposés 53 et 54 du support longitudinal 5. En position repliée du support 5 du rouleau, le support 5 avec le rouleau 50 est amené contre le corps tubulaire 30 entre deux pieds 20 et 22 rabattus. En position repliée du support 5 du rouleau, le rouleau 50 est plaqué contre le corps tubulaire 30 du mât. Après pliage, le support 5 du rouleau, le rouleau 50 et les pieds 20 à 22 sont ainsi ramassés et plaqués en cercle contre le corps tubulaire 30 du mât 3 procurant une servante extrêmement compacte.

Avantageusement, la servante 1 comporte un organe de verrouillage 8 (figures 3 et 4) pour bloquer en position d'utilisation (position horizontale) le support 5 du rouleau. L'organe de verrouillage 8 est de préférence une pièce mâle à rappel élastique qui est fixée sur la platine 4 et est apte à coopérer avec un trou 55 agencé sur l'un des côtés longitudinaux 53 du support 5.

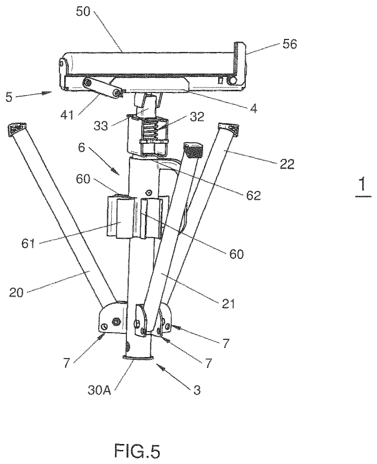

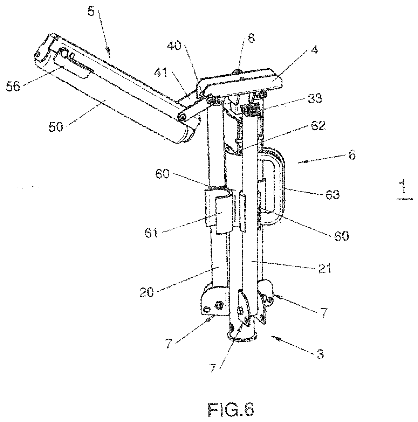

Le support 5 du rouleau peut comprendre une butée de calage 56 (figures 5 et 6) qui est pivotante afin d'être disposée parallèlement au support pour son rangement (figure 6) et perpendiculairement au support pour son utilisation (figure 5). En position d'utilisation de la butée de calage 56, les éléments longilignes destinés à être portés par le rouleau 50 peuvent ainsi être calés latéralement par ladite butée.

Quant au dispositif de blocage 6, il permet d'accueillir et de retenir en position repliée les trois pieds 20 à 22 et le support 5 avec le rouleau (en particulier les trois pieds 20 à 22 et le rouleau 50 porté par le support 5). Dans l'exemple illustré, le dispositif de blocage 6 est fixé sur le corps tubulaire 30 du mât et comporte quatre logements d'accueil répartis circulairement autour du corps tubulaire, dont trois logements 60 espacés régulièrement et adaptés à recevoir les trois pieds respectifs 20 à 22 et un logement 61 agencé entre deux logements 60 d'accueil de pieds et adapté à recevoir le rouleau 50 solidaire du support 5 (après pivotement du rouleau de sa position d'utilisation à sa position repliée).

De préférence, le dispositif de blocage 6 est fixé sur le corps tubulaire 30 par clippage ; le dispositif de blocage 6 comporte (figure 1) une forme en gouttière 62 en matière plastique élastique et ouverte en regard du corps tubulaire 30 de sorte à recevoir et retenir par clippage ledit corps tubulaire.

Chacun des logements d'accueil 60 et 61 présente une ouverture d'accueil tournée vers l'opposé du corps tubulaire 30. Les logements d'accueil 60 et 61 ont une section d'accueil qui correspond à la forme des pieds et de l'élément de soutènement à recevoir. Les logements d'accueil 60 et 61 sont en outre aptes à retenir directement les pieds et le support sans moyens de retenue rapportés ; en particulier, ils forment des moyens d'accueil et de retenue par clippage. Les logements d'accueil 60 et 61 sont de préférence en matière plastique. En particulier, les logements d'accueil 60 et 61 présentent selon une vue en coupe transversale une forme générale en C ou en lyre qui combinée à la matière sensiblement élastique du matériau constitutif procure une retenue par clippage. De plus, au le logement 61 du rouleau 60 est en matière plastique pour éviter d'abîmer le rouleau. De préférence, l'ensemble du dispositif de blocage 6 est en matière plastique telle qu'en polyamide.

Enfin, le dispositif de blocage 6 comporte un moyen de préhension 63 telle qu'une poignée qui s'étend parallèlement au corps tubulaire 30. La poignée 63 permet de porter et transporter aisément la servante 1 du type à rouleau dans son état replié.

Ainsi, la conception selon l'invention de la servante 1 à rouleau et/ou à billes procure, d'une part, une servante de taille usuelle en position d'utilisation, en particulier de hauteur comprise entre de l'ordre de 600 mm à plus d'1 m avec une assise au sol de l'ordre de 75 mm séparant les deux extrémités de deux pieds et une longueur de soutènement (longueur du rouleau 50) de 350 mm, et d'autre part, une servante extrêmement compacte dans sa position pliée qui s'inscrit (avec la poignée 63) dans un volume parallélépipédique ne dépassant pas 60 cm par 20 cm et par 15 cm, en particulier dans un volume de 53 cm par 15 cm et par 13 cm.

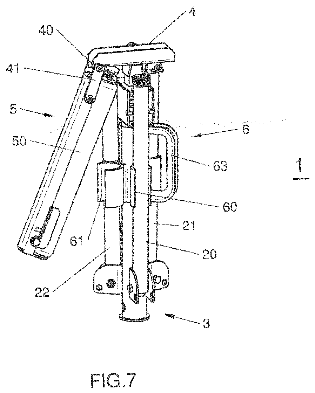

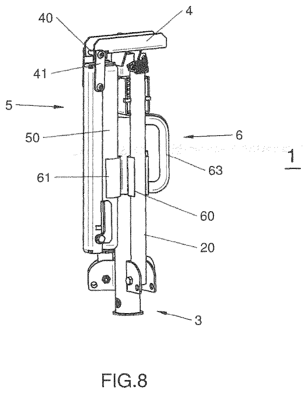

Le procédé de rangement est à présent décrit en regard des figures 5 à 8. Lorsque l'utilisateur a besoin de ranger la servante 1, il rentre le montant coulissant 31 complètement dans le corps tubulaire 30 du mât 3 tel qu'illustré sur la figure 2. Puis il se saisit du corps tubulaire 30 et commence à replier les pieds 20 à 22 comme montré sur la figure 5, jusqu'à replier totalement les pieds et les clipper dans les logements d'accueil 60. Ensuite, il déverrouille l'organe 8, se saisit du support 5 à rouleau et le fait pivoter en direction des pieds repliés comme illustré sur la figure 6. Il poursuit le mouvement de pivotement (figure 7) jusqu'à replier totalement le support 5 et enfin de clipper le rouleau 50 dans le logement d'accueil associé 61 (figure 8). Le procédé de rangement est terminé et a été extrêmement simple et rapide.

Pour installer à nouveau la servante en position d'utilisation, l'utilisateur se saisit du support 5 et tire dessus pour le déclipser puis le fait pivoter jusqu'à l'amener contre la platine 4. En pressant le support 5 contre la platine 4, l'organe de verrouillage 8 est automatiquement poussé et translaté vers l'opposé de la platine 4, et un fois le support 5 en position plaquée, l'organe de verrouillage 8 à rappel élastique revient en position et s'introduit dans le trou 55, ce qui verrouille le support 5 et le rouleau 50. L'utilisateur peut ensuite déclipser chacun des pieds 20 à 22 et les faire pivoter pour les déplier totalement. La servante est opérationnelle, l'utilisateur n'ayant qu'à agencer le montant coulissant 31 à la hauteur souhaitée. Par conséquent, le déploiement de la servante est également facile et rapide.

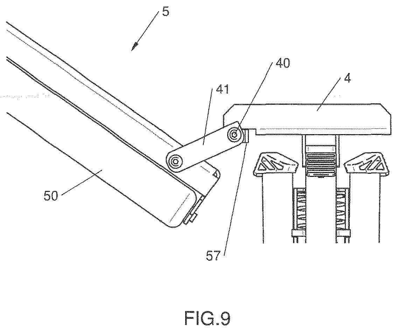

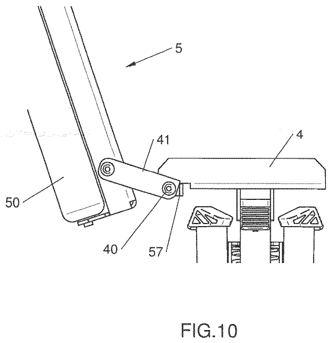

Pour faciliter encore davantage les mouvements et leur rapidité lors de l'installation de la servante (réaliser les mouvements de manière automatique pour l'utilisateur), le support 5 comporte une butée de pivotement 57 (figures 9 et 10) à proximité immédiate de l'extrémité distale d'une biellette 41 du côté de l'axe 40. Lorsque l'utilisateur relève le support 5 de rouleau autour de l'axe 40 (figure 9), la biellette 41 vient en appui contre la butée de pivotement 57, l'utilisateur n'a alors plus qu'à pivoter en direction de la platine 4 (figure 10) pour amener le support 5 jusque sur la platine 4, le trou 55 du support 5 se positionnant juste en face de l'organe de verrouillage 8.

## Revendications

1. Servante à fonction de soutènement, en particulier servante à rouleau et/ou à billes, comportant un piètement (2) pliable et comportant des pieds (20, 21, 22), un mât (3) télescopique qui comprend un corps tubulaire (30) et un montant coulissant (31), un support (5) portant au moins un élément de soutènement (50), le support étant fixé en extrémité du montant coulissant (31) et agencé dans un plan transversal au corps tubulaire (30) en position d'utilisation de la servante le support (5) étant apte à être agencé parallèlement au corps tubulaire (30) dans une position hors utilisation de la servante dite position rangée, **caractérisée en ce que**, en position rangée de la servante, les pieds sont pliés en direction du support selon un agencement parallèlement et autour du corps tubulaire (30) et le support (5) est en vis-à-vis du corps tubulaire (30) entre deux pieds pliés.

2. Servante selon la revendication 1, **caractérisée en ce que** le support (5) est pliable, en particulier pliable en étant apte à être rabattu contre le corps tubulaire (30).

3. Servante selon la revendication 1 ou 2, **caractérisée en ce que** le support (5) est apte à pivoter de 270°.

4. Servante selon l'une quelconque des revendications précédentes, **caractérisée en ce que** le support (5) est fixé au montant coulissant (31), de préférence via une platine d'interface (4), grâce à des moyens de liaison et d'articulation (41), en particulier les moyens de liaison et d'articulation (41) autorisant un mouvement de pivotement.

5. Servante selon la revendication précédente, **caractérisée en ce que** les moyens de liaison et d'articulation (41) comportent deux biellettes espacées et en regard qui sont, d'une part, reliées entre elles et fixées à un axe (40), de préférence l'axe étant solidaire de ladite platine d'interface (4), et d'autre part, à une des extrémités du support (5).

6. Servante selon l'une quelconque des revendications précédentes, **caractérisée en ce que** le piètement (2) comporte trois pieds (20, 21, 22) formant un trépied en position déployée du piètement.

7. Servante selon l'une quelconque des revendications 2 à 6, **caractérisée en ce qu'**elle comporte un dispositif de blocage (6) du piètement (2) et du support (5) dans leur position repliée, de préférence le dispositif de blocage (6) procurant également une fonction d'aide au rangement du piètement et du support.

8. Servante selon la revendication précédente, **caractérisée en ce que** le dispositif de blocage (6) est fixé sur le corps tubulaire (30) et comporte des logements d'accueil (60, 61) aptes à recevoir et retenir le piètement et l'élément de soutènement (50) porté par le support (5).

9. Servante selon la revendication 7 ou 8, **caractérisée en ce que** le dispositif de blocage (6) comporte des logements d'accueil répartis autour du corps tubulaire dont des logements d'accueil (60) sont destinés à recevoir et bloquer des pieds (20, 21, 22) repliés constitutifs du piètement et un autre logement d'accueil (61) est destiné à recevoir et bloquer l'élément de soutènement (50) porté par le support (5), de préférence les logements d'accueil (60, 61) présentent une ouverture d'accueil de section transversale en forme générale de lyre.

10. Servante selon l'une quelconque des revendications 7 à 9, **caractérisée en ce que** le dispositif de blocage (6) est à fixation par clippage sur le corps tubulaire (30) et les logements d'accueil (60, 61) sont à retenue par clippage du piètement et de l'élément de soutènement (50).

11. Servante selon l'une quelconque des revendications 7 à 10, **caractérisée en ce que** le dispositif de blocage (6) est à fonction de préhension pour l'ensemble de la servante, en particulier le dispositif de blocage (6) comporte une poignée (63).

12. Servante selon l'une quelconque des revendications 7 à 11, **caractérisée en ce qu'**au moins la partie du dispositif de blocage (6) recevant l'élément de soutènement (50) est en matière plastique, de préférence l'ensemble du dispositif de blocage (6) est en matière plastique.

13. Servante selon l'une quelconque des revendications précédentes, **caractérisée en ce qu'**elle comporte un système de verrouillage (8) du support (5) en position d'utilisation de la servante, en particulier le système de verrouillage (8) est une pièce mâle à rappel élastique apte à coopérer avec un trou (55) agencé dans le support (5).

14. Servante selon l'une quelconque des revendications précédentes, **caractérisée en ce que** l'extrémité (30A) du corps tubulaire (30) à l'opposé du montant coulissant (31) présente une forme plate et peut comprendre une semelle de protection en matière plastique.

15. Servante selon l'une quelconque des revendications précédentes, **caractérisée en ce que** ledit au moins un élément de soutènement (50) est un rouleau et/ou une rampe à billes.

## Patentansprüche

1. Ein Rollständer mit Stützfunktion, insbesondere ein Rollständer mit Rollen und/oder Kugeln, mit einem klappbaren Gestell (2) und Füßen (20, 21, 22), einem Teleskopmast (3), der aus einem röhrenförmigen Körper (30) und einem verschiebbaren Ständer (31) besteht, einer Halterung (5), die mindestens ein Stützelement trägt (50), wobei die Halterung am Ende des verschiebbaren Ständers (31) befestigt und quer zum röhrenförmigen Körper (30) in Arbeitsposition des Rollständers angeordnet ist; wobei die Halterung (5) geeignet ist, parallel zum röhrenförmigen Körper (30) in einer Nicht-Arbeitsposition des Rollständers, der sogenannten Parkposition, angeordnet zu sein, **gekennzeichnet dadurch, dass** in der Parkposition des Rollständers die Füße in Richtung der Halterung parallel zum und um den röhrenförmigen Körper (30) eingeklappt sind und die Halterung (5) dem röhrenförmigen Körper (30) gegenüber zwischen zwei eingeklappten Füßen liegt.

2. Der Rollständer nach Anspruch 1, **gekennzeichnet dadurch, dass** die Halterung (5) klappbar ist, insbesondere durch das Einklappen gegen den röhrenförmigen Körper (30).

3. Der Rollständer nach Anspruch 1 oder 2, **gekennzeichnet dadurch, dass** die Halterung (5) sich um 270° drehen kann.

4. Der Rollständer nach einem der vorstehenden Ansprüche, **gekennzeichnet dadurch, dass** die Halterung (5) am verschiebbaren Ständer (31) befestigt ist, vorzugsweise über eine Verbindungsplatte (4), mittels Verbindungs- und Gelenkmitteln (41), wobei die Verbindungs- und Gelenkmittel (41) insbesondere eine Drehbewegung ermöglichen.

5. Der Rollständer nach einem der vorstehenden Ansprüche, **gekennzeichnet dadurch, dass** die Verbindungs- und Gelenkmittel (41) aus zwei auseinander- und gegenüberliegenden Stangen bestehen, die einerseits miteinander verbunden und an einer Achse (40) befestigt sind, wobei die Achse vorzugsweise fest mit der Verbindungsplatte (4) verbunden ist, und andererseits an einem der Enden der Halterung (5).

6. Der Rollständer nach einem der vorstehenden Ansprüche, **gekennzeichnet dadurch, dass** das Gestell (2) aus drei Füßen besteht (20, 21, 22), die in der ausgefahrenen Position der Gestells einen Dreifuß bilden.

7. Der Rollständer nach einem der Ansprüche 2 bis 6, **gekennzeichnet dadurch, dass** er eine Verriegelung (6) des Gestells (2) und der Halterung (5) in ihrer eingeklappten Position umfasst, wobei die Verriegelung (6) vorzugsweise auch die Funktion zur Lagerung von Gestell und Halterung übernimmt.

8. Der Rollständer nach dem vorstehenden Anspruch, **gekennzeichnet dadurch, dass** die Verriegelung (6) am röhrenförmigen Körper (30) befestigt ist und Aufnahmen (60, 61) umfasst, die in der Lage sind, das Gestell und das von der Halterung (5) getragene Stützelement (50) aufzunehmen und zu halten.

9. Der Rollständer nach Anspruch 7 oder 8, **gekennzeichnet dadurch, dass** die Verriegelung (6) Aufnahmen umfasst, die rund um den röhrenförmigen Körper verteilt sind, dessen Aufnahmen (60) für die Aufnahme und das Verriegeln der eingeklappten Füße (20, 21, 22) vorgesehen sind, die das Gestell bilden, und eine weitere Aufnahme (61), die zur Aufnahme und zum Verriegeln des von der Halterung (5) getragenen Stützelements (50) vorgesehen ist; wobei die Aufnahmen (60, 61) vorzugsweise eine Öffnung mit einem allgemein leierförmigen Querschnitt aufweisen.

10. Der Rollständer nach einem der Ansprüche 7 bis 9, **gekennzeichnet dadurch, dass** die Verriegelung (6) am röhrenförmigen Körper (30) eine Clip-Befestigung ist und die Aufnahmen (60, 61) das Gestell und das Stützelement (50) durch eine Clip-Vorrichtung halten.

11. Der Rollständer nach einem der Ansprüche 7 bis 10, **gekennzeichnet dadurch, dass** die Verriegelung (6) eine Greiffunktion für den gesamten Rollständer aufweist, wobei die Verriegelung (6) insbesondere einen Griff (63) aufweist.

12. Der Rollständer nach einem der Ansprüche 7 bis 11, **gekennzeichnet dadurch, dass** zumindest der Teil der Verriegelung (6), der das Stützelement (50) aufnimmt, aus Kunststoff besteht, wobei vorzugsweise die gesamte Verriegelung (6) aus Kunststoff besteht.

13. Der Rollständer nach einem der vorstehenden Ansprüche, **gekennzeichnet dadurch, dass** er ein Verriegelungssystem (8) der Halterung (5) in Arbeitsposition des Rollständers umfasst, wobei das Verriegelungssystem (8) insbesondere aus einem Steckerteil mit elastischem Rückzug besteht, der mit einer Bohrung (55) in der Halterung (5) zusammenarbeiten kann.

14. Der Rollständer nach einem der vorstehenden Ansprüche, **gekennzeichnet dadurch, dass** das Ende (30A) des röhrenförmigen Körpers (30) gegenüber dem verschiebbaren Ständer (31) flach geformt ist und eine Schutzschicht aus Kunststoff umfassen kann.

15. Der Rollständer nach einem der vorstehenden Ansprüche, **gekennzeichnet dadurch, dass** mindestens ein Stützelement (50) eine Rolle und/oder eine Kugelauflage ist.

## Claims

1. Stand with support function, in particular roller and/or ball-bearing ramp stand, comprising a foldable base (2) and comprising feet (20, 21, 22), a telescopic post (3) that comprises a tubular body (30) and a sliding upright (31), a support (5) carrying at least one support element (50), the support being fastened at the end of the sliding upright (31) and arranged in a transverse plane to the tubular body (30) in the use position of the stand, the support (5) being able to be arranged parallel to the tubular body (30) in a non-use position of the stand in the so-called stowed position, **characterised in that**, in the stowed position of the stand, the feet are folded in the direction of the support in an arrangement parallel to and around the tubular body (30) and support (5) is aligned with the tubular body (30) between two folded feet.

2. Stand according to claim 1, **characterised in that** the support (5) is foldable, in particular foldable by being able to be folded back against the tubular body (30).

3. Stand according to claim 1 or 2, **characterised in that** the support (5) can be pivoted through 270°.

4. Stand according to any one of the preceding claims, **characterised in that** the support (5) is attached to the sliding upright (31), preferably via an interface plate (4), by means of connecting and articulating parts (41), in particular the connecting and articulating parts (41) allowing a pivoting movement.

5. Stand according to the preceding claim, **characterised in that** the connecting and articulating parts (41) comprise two spaced and opposing rods that are, at one end, linked to each other and fixed to an axis (40), the axis preferably being integral to said interface plate (4) and, at the other end, to one end of the support (5).

6. Stand according to any one of the preceding claims, **characterised in that** the base (2) comprises three feet (20, 21, 22) forming a tripod in the deployed position of the base.

7. Stand according to any one of claims 2 to 6, **characterised in that** it has a device (6) to lock the base (2) and the support (5) in their folded positions, preferably the locking device (6) also functioning to aid stowing the base and support.

8. Stand according to the preceding claim, **characterised in that** the locking device (6) is fixed to the tubular body (30) and has seating clips (60, 61) able to receive and retain the base and the support element (50) carried by the support (5).

9. Stand according to claims 7 or 8, **characterised in that** the locking device (6) comprises seating clips distributed around the tubular body, of which seating clips (60) are intended to receive and secure the folded feet (20, 21, 22) forming the base and another seating clip (61) is intended to receive and secure the support element (50) carried supported by the support (5), preferably, the seating clips (60, 61) have a cross-sectional opening to the seat in the overall shape of a lyre.

10. Stand according to any one of claims 7 to 9, **characterised in that** the locking device (6) is attached by clipping to the tubular body (30) and the seating clips (60, 61) are designed to retain the base and the support element (50) by clipping.

11. Stand according to any one of claims 7 to 10, **characterised in that** the locking device (6) has function to grasp the entire stand, in particular the locking device (6) includes a handle (63).

12. Stand according to any one of claims 7 to 11, **characterised in that** at least the part of the locking device (6) receiving the supporting element (50) is made of plastic, preferably the entire locking device (6) is made of plastic.

13. A stand according to any one of the preceding claims, **characterised in that** it has a system (8) for locking the support (5) in the use position of the stand, in particular the locking system (8) is a spring-loaded male part able to interact with a hole (55) arranged in the support (5).

14. Stand according to any one of the preceding claims, **characterised in that** the end (30A) of the tubular body (30) at the opposite end from the sliding upright (31) has a flat shape and may include a protective plastic sole.

15. Stand according to any one of the preceding claims, **characterised in that** said at least one support element (50) of the aforesaid may be a roller and/or a ball-bearing ramp.
